# EUROPEAN PATENT APPLICATION

(11) **EP 1 562 119 A1**
(43) Date of publication of application: **10.08.2005**
(21) Application number: 04360009.7
(22) Date of filing: 03.02.2004
(51) Int. Cl.: G06F 11/273

(54) **Method for providing a repair service**

(71) Applicant: ALCATEL, 75008 Paris (FR)
(72) Inventor: Rupp, Stephan, 74354 Besigheim (DE); Köstering, Nina, 70499 Stuttgart (DE); Jenisch, Markus, 71336 Waiblingen (DE)
(74) Representative: Kohler Schmid Möbus

(57) **Abstract**

A method for providing a repair service comprises the steps:
a. executing a program for analyzing the failure and/or transmitting an error message of a device (2) on a mobile terminal (5), wherein the program is adapted for the device (2);
b. automatically connecting the mobile terminal (5) with the faulty device (2) via a wireless interface (6);
c. analyzing the failure of the faulty device (2) using the program or establishing a connection to a remote analysis program using the program and/or at least outputting the error message of the faulty device (2);
d. transmitting the error message to a service company.

Hence, the mobile terminal may be used as analysis equipment for a number of different devices.

## Description

### Background of the invention

The invention relates to a method for providing a repair service.

Consumer devices of all kinds become more and more intelligent. Today there are few consumer devices without a processor, p.ex. a micro-processor. Such a technology often enables, in addition to the mere control of the devices, a detailed failure analysis if the device becomes defective. In cars this possibility has been used for many years. If the car fails to operate properly, an analysis device is connected to an interface of the processor and the failure is analyzed.

To this end, the car must be brought to a service company or a service man must come to the car, for example if the car cannot be driven anymore. Only after such an analysis measures for overcoming the failure can be implemented, even if the measures could be performed by the user himself in a simple sort of way. Furthermore, service providers must stock expensive analysis equipment.

With an increasing number of processors used in consumer devices such as cars, washing machines, kitchen appliances, heating systems, and consumer electronics, analysis and repair procedures as described above will be used more often. However, without a specific analysis device, a repair will not be possible anymore. If a processor controlled equipment has an error, the user has to contact a service company without any information about the error. The error information may in many cases be available in the defective product, but cannot be communicated to the service company. Therefore, the defective device must be brought to a service company or someone from the service company must come for an analysis. If all the necessary parts for a repair are available or if a repair is still economical may only be determined by a service man directly at the defective device.

Only in few cases, p. ex. printers or fax machines, the faulty devices print out or display an error code which may then be communicated to a service company by the user.

### Object of the invention

It is the object of the invention to provide a method for providing a repair service.

### Short description of the invention

This object is achieved by a method for providing a repair service, comprising the steps:
a. executing a program for analyzing the failure and/or transmitting an error message of a device on a mobile terminal, wherein the program is adapted for the consumer device,
b. automatically connecting the mobile terminal with the faulty device via a wireless interface, in particular using the program;
c. analyzing the failure of the faulty device using the program or establishing a connection to a remote analysis program using the program and/or at least outputting the error message of the faulty device;
d. transmitting the error message to a service company.

The inventive method is particularly useful for consumer devices, however, it may be applied to any kind of device, in particular those having a processor. By executing the program on the mobile terminal, p.ex. a mobile phone, a connection is automatically established to the faulty device. Protocols for mobile devices, such as Bluetooth, already exist. They enable devices to recognize and contact one another and to inform one another of the applications they provide. For the devices to be able to communicate they should normally be spaced apart a maximum of 10 m. This is particularly true if the wireless communication interface is embodied as short range radio interface, in particular as Bluetooth interface. The error message, which may be an error code or a message describing the cause of the failure, is output and transmitted to a service company via the mobile terminal. Thus, the service company has all the relevant data for repairing the device without having seen the device. The service company does not have to stock expensive analysis equipment anymore, since a catalogue of measures to be implemented if a particular error occurs may be supplied centrally by a producer of the device and may be accessed or downloaded, p. ex. from or via the internet. A user may be informed of the kind, cost and duration of the repair immediately. The method may be implemented with standard mobile terminals, p.ex. mobile phones having a Bluetooth interface, i.e. cheap standard mass market equipment. Hence, the mobile terminal may be used as analysis equipment for a number of different devices. The method may obviously also be used by service men.

The step of transmitting the error message to a service company may be implemented in various ways. For examples, the error message may be transmitted to the nearest service company automatically. Alternatively, the error message may be automatically transmitted to a central service point, which then forwards the error message to a particular service company. Furthermore, the program may comprise a list of service companies and allow the user to choose the service company. The list may be updated via a central server in the internet. However, the desired service company may also be entered by the user manually. The program may also allow the user to choose whether the error message is to be transmitted to a central service point, a service company suggested by the program, or a particular service company desired by the user.

Furthermore, a more detailed analysis of the error could be performed using the program on the mobile phone directly or for making a connection of a remote server to the failed device via the mobile terminal, wherein an analysis is performed by a program on the remote server. Performing the analysis on the mobile terminal has the advantage that a user is informed right away as to what the problem is. If it is a minor problem he may himself be able to fix the device.

The user may be given instructions for the repair by the program directly or by a remote server or service company by means of the mobile terminal.

In a particularly preferred variant of the method the location of the device is determined and transmitted to the service company for implementing location based services. This allows transmission of information relevant to the location of the device to the mobile terminal. Since the faulty device and the mobile terminal have to be close together to be able to communicate, the faulty device can be located by locating the mobile terminal, p. ex. by a mobile network provider. This may, for example, be done via propagation time measurements in a region or sector around the base station used by the mobile terminal. Alternatively, the faulty device itself may have its location stored and send the location information via the mobile terminal. Thus it is possible to send the error message to a central service point of a service company, which then informs a local service provider/company of the faulty device and initiates the repair. Alternatively, based on the location information, the error message may be transmitted to the nearest repair service or company directly. It should be mentioned that according to the invention the terms service company, service provider, repair service and service point may be used interchangeably.

In an advantageous variant of the method the program is downloaded from a server. For example, the program may be downloaded via or from the internet. The programs may be generated individually for each device and stored on a central server. Hence, they must only be downloaded if required. There is no need to store many programs in the mobile terminal and thus take up a large amount of storage space. The programs may be implemented as Java Midlets. Thus, the programs could be executed on mobile phones of the state of the art. Since the programs are stored centrally and only downloaded if needed, they may be changed or replaced centrally as well. If there is a change to a program, there is no need to inform all the users.

Advantageously, a speech connection between the mobile terminal and the service company is established. Thus, the user may be informed of the kind of error, the costs and duration of the repair. Additionally a date for the repair may be fixed right away. Preferably, the speech connection is established after the error message has been transmitted, i.e. the user is called by the service company on his mobile terminal. Alternatively, the speech connection is established automatically in parallel to sending the error message.

If an SMS (short message service) connection is established between the mobile terminal and the service company, additional information may be transmitted by the service company to the mobile terminal, for example instructions for a repair, which may be undertaken by the user himself or instructions as to how to get the faulty device into a safe state. Additionally or alternatively a data transfer between the mobile terminal and the service company may be initiated. The data transfer as well as the speech and SMS communication may take place via a telecommunications network, in particular a mobile network, i.e. via GSM, GPRS or UMTS.

Within the scope of the present invention falls also a system for performing the inventive method, comprising a mobile terminal with a wireless interface, in particular a short range radio interface, communicating with a device, in particular a consumer device, comprising a processor and a wireless interface, in particular a short range radio interface, and a reception means of a service company communicating with the mobile terminal via a communications network, in particular a mobile network. With such a system it is possible to use a standard mobile terminal, in particular mobile phone, for the error analysis of processor controlled equipment instead of product dependent expensive analysis equipment, which is only available in service companies. Detecting, analyzing and fixing errors becomes much more easier and quicker.

Preferably, the wireless communications interface is a Bluetooth interface. Hence, the faulty device and the mobile terminal communicate via a Bluetooth interface. Such an interface is standard in mobile phones. Hence, a corresponding interface needs only to be provided in the device. Such an interface is inexpensive to realize. Via a Bluetooth interface the device and mobile terminal can recognize and contact each other automatically. Also, a wireless communications link can be established via a Bluetooth interface. At this point it is to be noted that the term "interface" may be used for input/output ports of devices/terminals and for the communication link between devices.

In order to save storage space and for the user to have the up to date program for a particular device available, a remote server is provided for storing programs to be downloaded by the mobile terminal. Hence, the programs for all the devices owned by a user do not have to be stored on the mobile terminal. Only if a device is faulty, the corresponding program needs to be downloaded. Storing the programs centrally facilitates managing and updating the programs.

Within the scope of the invention also falls a mobile terminal, in particular a mobile phone, for performing the inventive method, comprising a wireless communications interface, in particular a short range radio interface, and a means, in particular a Java Virtual Machine, for executing a program. Thus, the user may buy the hardware of the analysis equipment independent of the device to be analyzed. The Java Virtual Machine allows the mobile terminal to be programmed and to execute programs downloaded from a central server, p.ex. via the internet.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawings

The invention is shown in the drawing.
- **Fig. 1**: shows a first embodiment of a system for performing the inventive method;
- **Fig. 2**: shows a second embodiment of a system for performing the inventive method.

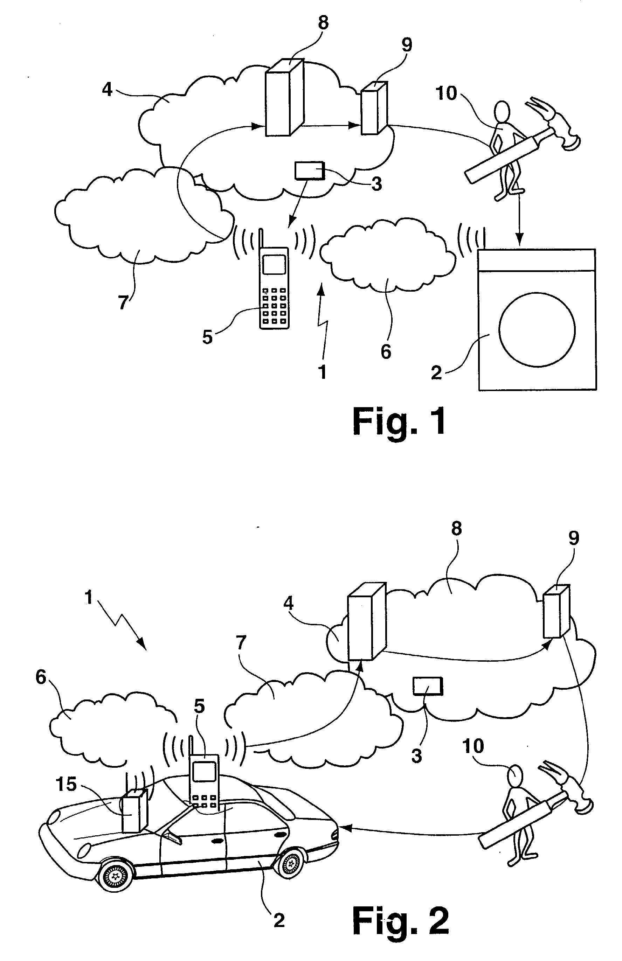

In the system 1 shown in Fig. 1 a consumer device 2 does not work properly. A processor in the device 2 generates an error message, p. ex. an error code. A user, who notices that the device 2 does not work properly anymore, downloads a program adapted to the device 2 from a central server 3, p.ex. via the internet 4, to the mobile terminal 5. The program is executed on the mobile terminal 5, here a mobile phone. Via a wireless communication interface 6, here a Bluetooth interface, the error message generated in the device 2 is transmitted to the mobile terminal 5 and from there via a communications network, which comprises a mobile network 7 and the internet 4 to a service company, in particular a reception means 8 embodied as a computer, of the service company. Once the location of the device 2 is established, either automatically or by speech communication between the service company and the user by means of the mobile terminal 5, a local repair service 9 is informed, for example via the internet 4. The local repair service 9 sends a service man 10 in order to repair the device 2.

Fig. 2 shows a similar system 1 to that shown in Fig. 1, hence the same numerals are used for corresponding features. In Fig. 2 the device 2 is embodied as a car with an on-board computer 15, which communicates via the wireless communications interface 6 with the mobile terminal 5. The computer 15 can send out a signal to indicate to the user that an error occurred. Thus, the user can download the relevant program via the mobile terminal 5. In this case the program may additionally include the possibility of performing an analysis of the error and informing the user about the error and necessary repair. Alternatively, the program may already be stored in the terminal 5, p.ex. because of an earlier error and downloading of the program then.

## Claims

1. Method for providing a repair service, comprising the steps:
a) executing a program for analyzing the failure and/or transmitting an error message of a device (2) on a mobile terminal (5), wherein the program is adapted for the device (2);
b) automatically connecting the mobile terminal (5) with the faulty device (2) via a wireless interface (6), in particular a short range radio interface;
c) analyzing the failure of the faulty device (2) using the program or establishing a connection to a remote analysis program using the program and/or at least outputting the error message of the faulty device (2);
d) transmitting the error message to a service company.

2. Method according to claim 1, **characterized in that** the location of the device (2) is determined and transmitted to the service company for implementing location based services.

3. Method according to claim 1, **characterized in that** the program is downloaded from a server (3).

4. Method according to claim 1, **characterized in that** a speech connection between the mobile terminal (5) and the service company is established.

5. Method according to claim 4, **characterized in that** the speech connection is established automatically.

6. Method according to claim 1, **characterized in that** a SMS connection is established between the mobile terminal (5) and the service company.

7. System (1) for performing the method according to claim 1, comprising a mobile terminal (5) with a wireless communications interface, in particular a short range radio interface, communicating with a device (2) comprising a processor and a wireless communications interface, in particular a short range radio interface, and a reception means (8) of a service company communicating with the mobile terminal (5) via a communications network (4, 7).

8. System according to claim 7, **characterized in that** the wireless communications interface (6) is a Bluetooth interface.

9. System according to claim 7, **characterized in that** a remote server (3) is provided for storing programs to be downloaded by the mobile terminal (5).

10. Mobile terminal (5), in particular mobile phone, for performing the method according to claim 1, comprising a wireless communications interface, in particular a short range radio interface, and means, in particular a Java Virtual Machine, for executing a program.
